**Europäisches Patentamt**

**European Patent Office**

**Office européen des brevets**

(11) Veröffentlichungsnummer: **0 157 264**
A2

# (12) EUROPÄISCHE PATENTANMELDUNG

(21) Anmeldenummer: 85103059.3

(22) Anmeldetag: 16.03.85

(51) Int. Cl.⁴: **F 23 L 7/00**, F 23 B 7/00

(30) Priorität: 20.03.84 DD 261035

(43) Veröffentlichungstag der Anmeldung: 09.10.85 Patentblatt 85/41

(84) Benannte Vertragsstaaten: **BE DE FR GB LU NL**

(71) Anmelder: **VEB Ingenieurtechnik Halle, Alter Markt 17 Postfach 245, DDR-4020 Halle (Saale) (DD)**

(72) Erfinder: **Anschütz, Dieter, Dipl.-Ing., Florastrasse 30, DDR-1147 Berlin (DE)**
Erfinder: **Bachmann, Hans, Dipl.-Ing. Dr.-oec, Elsa-Brandström-Strasse 99, DDR-4020 Halle (DE)**
Erfinder: **Fülgraff, Jahn-Peter, Dipl.-Ing., Prenzlauer Promenade 117, DDR-1100 Berlin (DE)**
Erfinder: **Lenze, Wolfgang, Dipl.-Ing., Grötzstrasse 13, DDR-4220 Halle (DE)**
Erfinder: **Jung, Gernot, Dipl.-Ing., Götzstrasse 10, DDR-4020 Halle (DE)**
Erfinder: **Müller, Manfred, Ing., Müller, Manfred, DDR-4020 Halle (DE)**

(74) Vertreter: **Hoffmann, Klaus, Dr. rer. nat. et al, Hoffmann , Eitle & Partner Patentanwälte Arabellastrasse 4, D-8000 München 81 (DE)**

(54) **Verfahren und Einrichtungen zum schadstoffarmen Betreiben von Hochdruckdampferzeugern mit minderwertigen Brennstoffen, insbesondere auf Braunkohlenbasis.**

(57) Die Erfindung betrifft ein Verfahren und eine zugehörige Einrichtung zum schadstoffarmen Betreiben von Hochdruckdampferzeugern mit minderwertigen Brennstoffen insbesondere auf Braunkohlenbasis unter Einsatz mindestens einer Vorfeuerung nach dem Prinzip der Schwelgasnachverbrennung mit Saugzugbelüftung.

Ziel der Erfindung ist es, ein Verfahren nebst zugehöriger Einrichtung zu schaffen, mit dessen Einsatz die bei der Verbrennung minderwertiger Brennstoffe entstehenden schädlichen Rauchgasbestandteile auf ein Minimum begrenzt werden.

Gemäß der Erfindung wird dies mit einem Verfahren nebst zugehöriger Einrichtung erreicht, indem in einer ersten, dem Hochdruckkessel vorgeschalteten Stufe in den von der Vorfeuerung gelieferten Schwelgasstrom bzw. in die Schwelgasflamme ein alkalischer Dampf eingeblasen wird, der durch Mischung eines Nebels feinster Tröpfchenform aus einer vorzugsweise gesättigten Kalkmilchlösung mit Sattdampf erhalten wird. Die Zuführung des alkalischen Dampfes erfolgt dabei so, daß er bei gleichzeitig vollständiger Durchmischung mit dem Schwelgasstrom in den Bereich der höchsten Flammentemperatur gelangt und der enthaltene Kalk mit den schädlichen Schwefelverbindungen zu naßabscheidbaren Teilen reagiert. Der dadurch erhöhte Feststoffanteil im Rauchgas wie auch die noch enthaltenen schädlichen Schwefelverbindungen werden in einer zweiten, dem Hochdruckkessel nachgeschalteten kombinierten Entstaubungs- und Entschwefelungsanlage weitgehend aus dem Rauchgas entfernt.

0157264

Verfahren und Einrichtungen zum schadstoffarmen Betreiben von Hochdruckdampferzeugern mit minderwertigen Brennstoffen, insbesondere auf Braunkohlenbasis

Anwendungsgebiet der Erfindung

Die Erfindung betrifft ein Verfahren und eine zugehörige Einrichtung zum schadstoffarmen Betreiben von Hochdruckdampferzeugern mit minderwertigen Brennstoffen insbesondere auf Braunkohlenbasis unter Einsatz mindestens einer Vorfeuerung nach dem Prinzip der Schwelgasnachverbrennung mit Saugzugbelüftung.

Charakteristik der bekannten technischen Lösungen

Die Verwendung von Vorfeuerungen nach dem Prinzip der Schwelgasnachverbrennung mit Saugzugbelüftung zur Verbrennung von minderwertigen Brennstoffen insbesondere auf Braunkohlenbasis bspw. zu Heizzwecken oder zur Erzeugung von Niederdruck- bzw. Hochdruckdampf ist bekannt. Auch bei der Schwelgasnachverbrennung entstehen insbesondere durch den in allen fossilen Brennstoffen enthaltenen Schwefel im Rauchgas schädliche Schwefelverbindungen (Schwefeloxide, Schwefelwasserstoff), die einerseits zur Begrenzung von Schädigungen der Umwelt bestimmte Grenzwerte nicht überschreiten und die andererseits auch im Hinblick auf ihre nachteiligen Auswirkungen im Hochdruckkessel bzw. in der Feuerungsanlage möglichst niedrig gehalten werden sollen.

Zur Reduzierung dieser schädlichen Bestandteile in den Rauchgasen, insbesondere bei der Verbrennung von Brennmedien auf Braunkohlenbasis, wurden schon verschiedene Verfahren vorgeschlagen. Neben dem Zumischen von feinkörnigem Kalziumoxid zur Braunkohle vor der Verbrennung (DD-AP 142 083) wurde auch schon vorgeschlagen, eine wäßrige Aufschwemmung geeigneter pulverförmiger Additive kontinuierlich in den Bereich der Brennerflamme einzusprühen (DE-AS 19 02 504). Dieses Verfahren weist den Nachteil auf, daß mit dem Einsprühen, das mit Hilfe eines chemisch neutralen Injektionsmittels erfolgen soll, die Flamme im Einsprühbereich wesentlich abgekühlt wird, wodurch u. a. auch die Reaktionsbedingungen für die Neutralisierung der schädlichen Schwefelverbindungen negativ beeinflußt werden.

Die Zugabe von Additiven zur Braunkohle, wie sie bspw. auch gemäß DD-PS 154 307 vorgeschlagen wird, ist beim Einsatz von Vorfeuerungen nach dem Prinzip der Schwelgasnachverbrennung wenig erfolgversprechend, weil die erforderlichen Reaktionsbedingungen (Temperaturen) im Glutbett der Vorfeuerung bei der Verschwelung des Brennstoffes nicht erreicht werden. Entsprechende Verfahren und Einrichtungen zur Reduzierung insbesondere der schädlichen Schwefelverbindungen in den Rauchgasen sind beim Einsatz derartiger Vorfeuerungen noch nicht bekannt geworden.

Ziel der Erfindung

Es ist Ziel der Erfindung, ein Verfahren und eine zugehörige Einrichtung zum schadstoffarmen Betreiben von Hochdruckdampferzeugern mit minderwertigen Brennstoffen insbesondere auf Braunkohlenbasis zu entwickeln, das die vorbeschriebenen Nachteile weitgehend vermeidet und mit dessen Einsatz die bei der Verbrennung derartiger Brennstoffe entstehenden schädlichen Schwefelverbindungen (und anderer toxischer Bestandteile) auf ein Minimum reduziert werden.

Darlegung des Wesens der Erfindung

Der Erfindung liegt die Aufgabe zugrunde, ein Verfahren und eine zugehörige Einrichtung zum schadstoffarmen Betreiben von Hochdruckdampferzeugern mit minderwertigen Brennstoffen insbesondere auf Braunkohlenbasis unter Verwendung von Vorfeuerungen nach dem Prinzip der Schwelgasnachverbrennung mit Saugzugbelüftung zu entwickeln, bei dem zur Neutralisierung der bei der Verbrennung bzw. der Verschwelung entstehenden schädlichen Schwefelverbindungen in den Rauchgasen optimale Reaktionsbedingungen hergestellt werden und bei dem durch eine mehrstufige Behandlung der Rauchgase die Abgabe von Schadstoffen an die Atmosphäre auf ein Minimum begrenzt wird.

Gemäß der Erfindung wird diese Aufgabe mit einem Verfahren und einer zugehörigen Vorrichtung gelöst, indem in einer ersten, dem Hochdruckkessel vorgeschalteten Stufe in den von der Vorfeuerung gelieferten Schwelgasstrom ein alkalischer Dampf eingeblasen wird, der durch Mischung eines Nebels feinstverteilter Tröpfchen aus einer vorzugsweise gesättigten Kalkmilchlösung mit Sattdampf in einer zugehörigen Mischkammer erhalten wird. Die Zuführung des alkalischen Dampfes erfolgt dabei so, daß er bei gleichzeitig vollständiger Durchmischung mit dem Schwelgasstrom in den Bereich der höchsten Flammentemperatur gelangt. Der alkalische Anteil des zugeführten Dampfes ist dabei im Sinne einer Überschußreaktion mit den im Schwelgas enthaltenen Schwefelverbindungen so bemessen, daß die Schwefelverbindungen bzw. Schwefeloxide im Sinne einer stöchiometrisch einschätzbaren Reaktion zu naßabscheidbaren festen Teilen überführt werden.

Der dadurch erhöhte Feststoff- bzw. Staubanteil im Rauchgas wie auch die noch im Rachgas enthaltenen Schwefelverbindungen werden in einer zweiten, dem Hochdruckkessel nachgeschalteten Stufe mit Hilfe einer kombinierten Entstaubungs- und Entschwefelungsanlage wesentlich reduziert. Dazu wird das Rauchgas zunächst durch Wärmetausch mit dem zum Schornstein abströmeneden, abgekühlten und gereinigten Rauchgas um ca. ein Drittel und nachfolgend durch gesteuerten Wärmetausch mit einem bspw. wassergekühlten Wärmetauscher um ca. ein weiteres Drittel seiner ursprünglichen Temperatur abgekühlt, anschließend in einem durch Prallwände begrenzten Verweilraum mit einer vorzugsweise gesättigten Kalkmilchlösung intensiv be-regnet und schließlich vor dem Ableiten in den Schornstein durch Wärmetausch mit dem zuströmenden, ungereinigten, heißen Rauchgas wieder auf ca. die Hälfte bis zwei Drittel seiner ursprünglichen Temperatur aufgeheizt.

Die dem Hochdruckkessel vorgeschaltete Stufe zur Erzeugung des alkalischen Dampfes weist eine Mischekammer auf, der einerseits über einen Vorentspannungsraum Sattdampf und der andererseits ein Nebel feinstverteilter Tröpfchen aus einer vorzugsweise gesättigten Kalkmilchlösung, der bspw. durch Verdüsen mit einem geeigneten Injektionsmittel erhalten werden kann, zugeführt wird. Dabei bildet die bei gleicher Temperatur, jedoch reduziertem Druck erfolgende Umwandlung des Sattdampfes in überhitzten Dampf eine ideale Voraussetzung für ein hohes Aufnahmevermögen des Dampfes für den in die Mischkammer eingedüsten Kalkmilchnebel.

Die dem Hochdruckkessel nachgeschaltete kombinierte Entstaubungs- und Entschwefelungsanlage wird im folgenden Ausführungsbeispiel näher beschrieben.

Ausführungsbeispiel

Die Erfindung soll nachstehend an einem Ausführungsbeispiel näher beschrieben werden.

In den zugehörigen Zeichnungen zeigen:

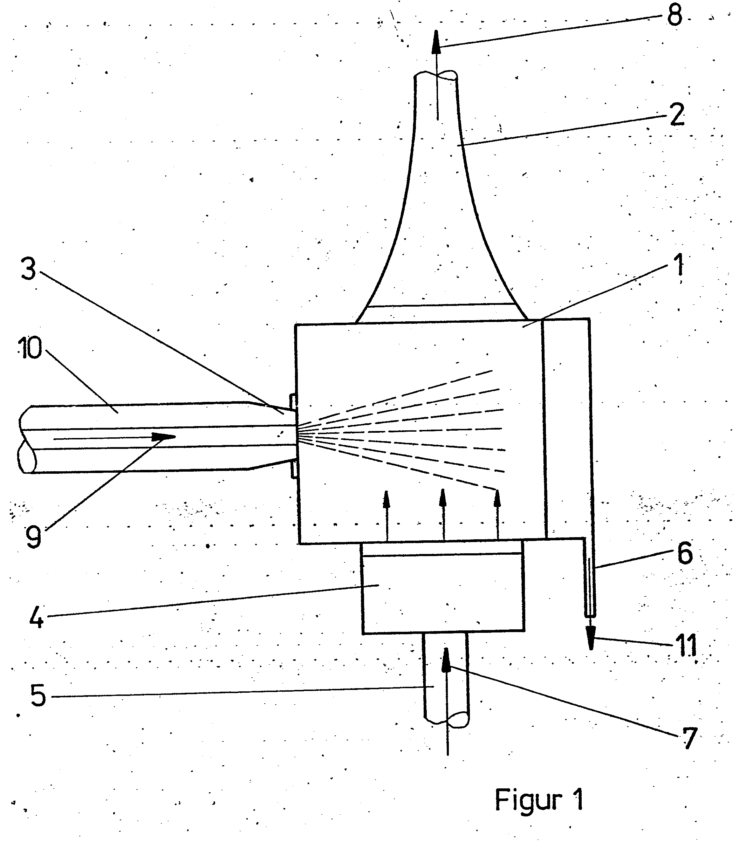

Fig. 1: die dem Hochdruckkessel vorgeschaltete Mischkammer zur Herstellung des alkalischen Dampfes;

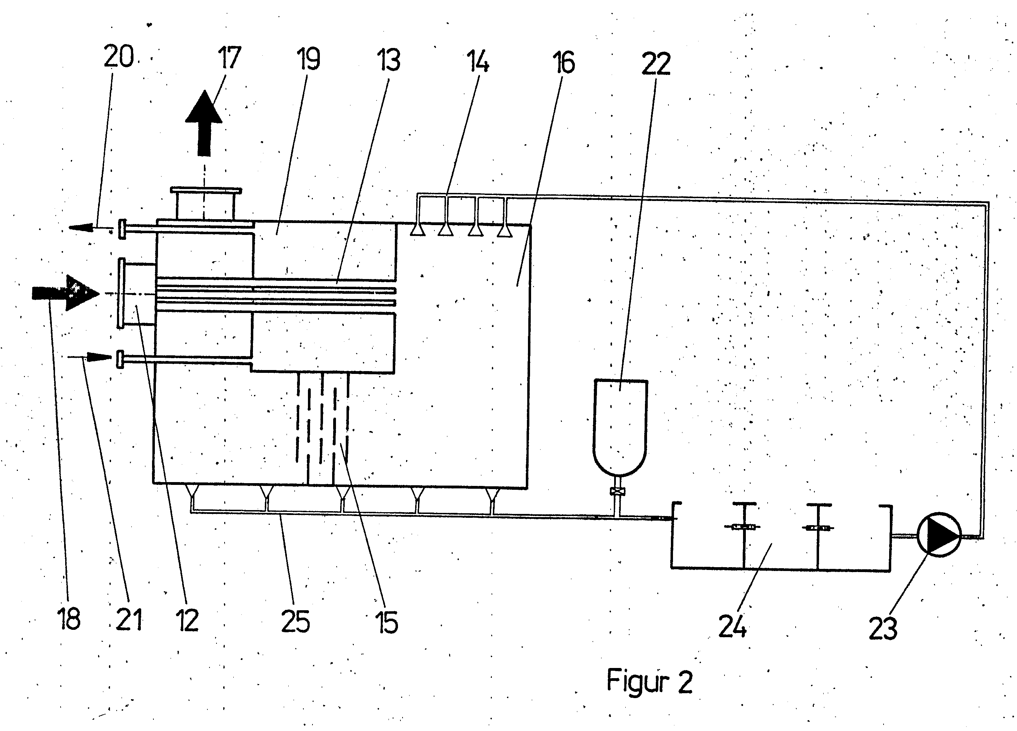

Fig. 2: die kombinierte Entstaubungs- und Entschwefelungsanlage, die dem Hochdruckkessel nachgeschaltet ist.

Der dem Hochdruckkessel (nicht dargestellt) vorgeschalteten Mischkammer 1 wird durch eine Dampfzuleitung 5 und einen Vorentspannungsraum 4 Sattdampf 7 zugeleitet, der in der Mischkammer 1 bei etwa gleichbleibender Temperatur entspannt und in überhitzten Dampf übergeht. Weiter wird der Mischkammer 1 mit Hilfe der Einspritzdüse 3 und unter Verwendung eines geeigneten Injektionsmittels 10 eine gesättigte Kalkmilchlösung so zugeführt, daß sie in die Mischkammer 1 als Nebel feinster Tropfenform gelangt, dort vom überhitzten Dampf aufgenommen und als alkalischer Dampf 8 über den Dampfableitungsstutzen dem von der Vorfeuerung gelieferten Schwefelgasstrom zugeführt wird, dergestalt, daß im Bereich der Verbrennung eine innige Durchmischung der Dampfphase mit den Schwefelgasen erreicht wird. Dadurch wird in diesem Bereich eine große Anzahl sogenannter Reaktionspunkte für die Überführung der schädlichen Schwefelverbindungen in naßabscheidbare Feststoffteilchen geschaffen. Das bei der Mischung in der Mischkammer 1 anfallende Kondensat 11 wird über den Kondensatablauf 6 abgeführt.

Der dem Hochdruckkessel nachgeschalteten kombinierten Entstaubungs- und Entschwefelungsanlage wird das ungereinigte, heiße Rauchgas 18 über die Rauchgaszuführung 12 zugeführt und in einer ersten Stufe durch Wärmetausch mit dem zum Schornstein 17 abströmenden, gereinigten, abgekühlten Rauchgas um etwa ein Drittel seiner Temperatur abgekühlt. Durch gesteuerten Wärmetausch mit einem Wärmetauscher 13 mit zugehörigem Vorlauf 20 bzw. Rücklauf 21 wird das Rauchgas um ca. ein weiteres Drittel seiner ursprünglichen Temperatur abgekühlt und anschließend in einem durch Prallwände 15 begrenzten Verweilraum

16 mit Hilfe einer Beregnungseinrichtung 14 mit einem geeigneten wäßrigen Neutralisationsmittel, vorzugsweise einer gesättigten Kalkmilchlösung, beregnet. Das so abgekühlte und gereinigte Rauchgas wird schließlich durch Wärmetausch mit dem zuströmenden, heißen, ungereinigten Rauchgas 18 wieder auf ca. die Hälfte bis zwei Drittel seiner ursprünglichen Temperatur aufgeheizt und in den Schornstein 17 abgeleitet.

Die sich am Boden des Verweilraumes 16 sammelnde Beregnungsflüssigkeit wird durch Abflußkanäle 25 abgeführt, erforderlichenfalls durch Zugabe eines Neutralisationsmittels, vorzugsweise ebenfalls eine gesättigte Kalkmilchlösung, nochmals neutralisiert, in Absetzkammern 24 geleitet und der flüssige Anteil bspw. mit Hilfe einer Pumpe 23 erneut der Beregnungseinrichtung 14 zugeführt.

!Patentansprüche

1. Verfahren zum schadstoffarmen Betreiben von Hochdruckdampferzeugern mit minderwertigen Brennstoffen insbesondere auf Braunkohlenbasis unter Einsatz mindestens einer Vorfeuerung nach dem Prinzip der Schwelgasnachverbrennung mit Saugzugbelüftung, gekennzeichnet dadurch, daß

- in einer ersten, dem Hochdruckkessel vorgeschalteten Stufe in den Schwelgasstrom bzw. in die Schwelgasflamme ein alkalischer Dampf (8), der durch Mischung eines Nebels feinster Tröpfchenform aus einer vorzugsweise gesättigten Kalkmilchlösung (9) mit Sattdampf (7) in einer zugehörigen Mischkammer (1), bei gleichzeitiger Entspannung des Sattdampfes (7) zu überhitztem Dampf, erhalten wird, so eingeblasen wird, daß er bei gleichzeitig vollständiger Durchmischung mit dem Schwelgasstrom in den Bereich der höchsten Flammentemperatur gelangt und dessen alkalischer Anteil im Sinne einer Überschußreaktion mit den im Schwelgas enthaltenen schädlichen Schwefelverbindungen so bemessen ist, daß die schädlichen Schwefelverbindungen bzw. Schwefeloxide im Sinne einer stöchiometrisch einschätzbaren Reaktion zu naßabscheidbaren festen Produkten überführt werden;

- in einer zweiten, dem Hochdruckkessel nachgeschalteten Stufe der durch die Zugabe des Kalkes bzw. durch die Reaktion des Kalkes mit dem enthaltenen Schwefel erhöhte Feststoffanteil im Rauchgas wie auch die noch enthaltenen schädlichen Schwefelverbindungen mit Hilfe einer kombinierten Entstaubungs- und Entschwefelungsanlage wesentlich reduziert werden, indem das Rauchgas (18) durch Wärmetausch mit dem zum Schornstein (17) abströmenden, abgekühlten und gereinigten Rauchgas um ca. ein Drittel und nachfolgend durch gesteuerten Wärmetausch mit einem bspw. wassergekühlten Wärmetauscher (13) um ca. ein weiteres Drittel seiner ursprünglichen Temperatur abgekühlt, anschließend in einem durch Prallwände (15) begrenzten Verweilraum (16) mit Hilfe einer Beregnungseinrichtung (14) mit einer vorzugsweise gesättigten Kalkmilchlösung intensiv beregnet und schließlich vor dem Ableiten in den Schornstein (17) durch Wärmetausch mit dem zuströmenden, heißen, ungereinigten Rauchgas (18) wieder auf ca. die Hälfte bis zwei Drittel seiner ursprünglichen Temperatur aufgeheizt wird.

2. Einrichtung zur Durchführung des Verfahrens nach Anspruch 1, gekennzeichnet durch eine Mischkammer (1), der einerseits über einen Vorentspannungsraum (4) Sattdampf (7), und der andererseits über eine Einspritzdüse (3) ein Nebel feinstverteilter Tröpfchenform aus einer vorzugsweise gesättigten Kalkmilchlösung (9), der bspw. durch Verdüsen der Kalkmilchlösung mit einem geeigneten Injektionsmittel (10) erhalten werden kann, zugeführt wird, wobei durch die bei gleicher Temperatur, jedoch reduziertem Druck erfolgende Umwandlung des Sattdampfes (7( in überhitzten Dampf ideale Bedingungen für ein hohes Aufnahmevermögen des Dampfes für den in die Mischkammer (1) eingedüsten Kalkmilchnebel hergestellt werden.

3. Einrichtung zur Durchführung des Verfahrens nach Anspruch 1, gekennzeichnet durch eine dem Hochdruckkessel nachgeschaltete, kombinierte Rauchgasentstaubungs- und Entschwefelungsanlage aus einer Rauchgaszuführung (12) für das ungereinigte, heiße Rauchgas (18), die sich in einem ersten Abschnitt zum Wärmetausch mit dem abströmenden, gereinigten und abgekühlten Rauchgas mit der zugehörigen Rauchgasabführung zum Schornstein (17) kreuzt und die in einem zweiten Abschnitt einen bspw. wassergekühlten Wärmetauscher (13) zur weiteren, gesteuerten Abkühlung des ungereinigten Rauchgases durchläuft, dem ein durch Prallwände (15) begrenzter Verweilraum (16) mit einer Einrichtung (14) zur intensiven Beregnung des Rauchgases mit einer vorzugsweise gesättigten Kalkmilchlösung mit entsprechenden Ablaufkanälen (25) nachgeschaltet ist und einer die Rauchgaszuführung (12) kreuzenden Rauchgasabführung zum Schornstein (17) zur Aufheizung des abströmenden, gereinigten und abgekühlten Rauchgases durch Wärmetausch mit dem zuströmenden, ungereinigten heißen Rauchgas (18), wobei die durch die Ablaufkanäle (25) abfließende Lösung gegebenenfalls durch einen nochmaligen Zusatz einer vorzugsweise gesättigten Kalkmilchlösung neutralisiert und anschließend in Absetzkammern (24) abgeleitet wird.

Hierzu 1 Blatt Zeichnungen

Figur 1

0157264

1/2

Figur 2